# EUROPÄISCHE PATENTSCHRIFT

(11) **EP 0 979 900 B1**
(45) Veröffentlichungstag und Bekanntmachung des Hinweises auf die Patenterteilung: **26.10.2005**
(21) Anmeldenummer: 99115564.9
(22) Anmeldetag: 06.08.1999
(51) Int. Cl.: E02D 19/12, E02D 19/18, B09C 1/00

(54) **Dichtwandkammersystem**
Trench wall cell system
Système cellulaire formé de barrettes d'étanchéité

(30) Priorität: 10.08.1998 DE 19836028
(43) Veröffentlichungstag der Anmeldung: 16.02.2000
(73) Patentinhaber: Bilfinger Berger AG, 68165 Mannheim (DE)
(72) Erfinder: Wisinger, Falk, 91126 Schwabach (DE); Völkner, Reinhold, A-8413 Ragnitz (AT)
(74) Vertreter: Schmid, Rudolf

(56) Entgegenhaltungen:
- EP-A- 0 843 049
- EP-A- 0 844 031
- DE-A- 3 708 003
- DE-U- 29 706 593
- US-A- 5 758 991
- PATENT ABSTRACTS OF JAPAN vol. 1995, no. 09, 31. Oktober 1995 (1995-10-31) & JP 07 145614 A (TAISEI CORP), 6. Juni 1995 (1995-06-06)

## Beschreibung

Die Erfindung betrifft ein Verfahren zur Herstellung einer hydraulischen Verbindung von Dichtwandkammern eines Dichtwandkammersystems bestehend aus parallel zueinander verlaufenden Dichtwänden und Querschotts, die in Abständen zwischen den Dichtwänden angeordnet sind.

Aus der DE-A 37 08 003 ist es bekannt, kontaminierte Bereiche wie Mülldeponien, Tanklager, Standorte von Industrieanlagen und andere durch nahezu wasserundurchlässige Dichtelemente vom Grundwasser zu trennen und damit eine Verfrachtung der Kontamination durch das Grundwasser zu verhindern. Diese Dichtelemente können in vielfältiger Form ausgeführt werden, beispielsweise als überschnittene Bohrpfahlwand, als Schlitzwand im Einphasen- und Zweiphasenverfahren, als Schmalwand, als Hochdruckerosionswand und als HDI-Wand, die in eine wasserundurchlässige Schicht einbinden oder zum Zwecke einer horizontalen Abdichtung mit künstlichen wasserundurchlässigen Sohlen, wie z.B. HDI-Sohlen oder Unterwasserbetonsohlen versehen sind. Um die Systemdichtigkeit einer Umschließung überprüfen zu können, hat sich das zweischalige Kammersystem bewährt. Dabei werden zwei parallel laufende Dichtelemente erstellt, die durch Querschotts in einzelne Kammern unterteilt werden. Damit kann die gesamte Umschließung in einzelne überschaubare und für sich kontrollierbare Bereiche unterteilt werden. Durch entsprechende Wasserhaltungsmaßnahmen wie Absenken des Wasserspiegels innerhalb der Umschließung und Regulierung des Kammerwasserstandes auf ein Niveau zwischen Außen- und Innenwasserspiegel wird ein hydraulisches Gefälle erzeugt, welches den Austritt von kontaminiertem Wasser aus dem umschlossenen Bereich verhindert.

Die einzelnen Kammern eines Kammersystems sind in der Regel als autarke Systeme und ohne jegliche Verbindung mit benachbarten Kammern aufgebaut. Um den Betrieb des Kammersystems zu optimieren, können mehrere benachbarte Kammern mit Hilfe von sogenannten Kammerverbindungsbauwerken wie beispielsweise elliptische Betonschächte versehen werden, die im Regelbetrieb eine hydraulische Verbindung der Kammern untereinander ermöglichen und während einer Kammerprüfung abschottbar sind. Die einzelnen Kammern können auch mit einer Filterrohrringleitung ausgestattet sein, so daß dadurch ebenfalls eine hydraulische Verbindung der Kammern untereinander ermöglicht wird. Bei beiden Systemen ist im Regelbetrieb des Kammersystems der freie Wasserdurchfluß durch alle Kammern gewährleistet.

Die Systeme mit Kammerverbindungsbauwerken bzw. einer Filterrohrringleitung sind im Bereich der Querschotts mit Absperrvorrichtungen versehen, mit deren Hilfe die einzelnen Kammern für eine Kammerprüfung hydraulisch abgeschottet werden können. Die Absperrvorrichtungen werden für eine Kammerprüfung geschlossen. Jede Kammer ist außerdem mit einem Wasserhaltungssystem bestehend aus einer Pumpe und einem elektronisch gesteuerten Kontroll- und Regelsystem ausgestattet. Dieses System mißt kontinuierlich den Wasserstand in den Kammern und pumpt bei Erreichen des Innenwasserspiegels Reinwasser in die Kammern bzw. entnimmt diesen Wasser, wenn der Kammerwasserspiegel über einen Sollwert ansteigt.

Dieser Stand der Technik besitzt nun verschiedene Nachteile. Zum einen beinhaltet die auszuführende Kammergeometrie und dabei insbesondere die Kammerlänge immer einen Kompromiß zwischen der Vorgabe, möglichst kurze Kammern und damit einen überschaubaren Kontrollbereich für die Lokalisierung möglicherweise auftretender Undichtigkeiten vorzuschlagen. Zum anderen ist es wünschenswert, möglichst große Kammern herzustellen, um die Anzahl der Wasserhaltungssysteme und damit den Aufwand an teurer und wartungsintensiver Steuerungstechnik zu reduzieren. Je mehr Kammern das System besitzt, desto mehr Wasserhaltungssysteme müssen installiert werden und desto wahrscheinlicher werden Funktionsstörungen auftreten.

Der Einbau von Kammerverbindungsbauwerken oder einer Filterrohrringleitung ist mit sehr großem Aufwand verbunden (Herstellung eines Schachtes zur Aufnahme des Kammerverbindungsbauwerks bzw. Einbringen der Filterrohrringleitung und in beiden Fällen Abdichtung gegen das Querschott). Ein weiterer Nachteil liegt darin, daß die inneren und äußeren Dichtelemente herstellungsbedingt unterschiedliche Durchlässigkeiten besitzen. Weist das äußere Dichtelement eine höhere Durchlässigkeit als das innere Dichtelement auf, so bedeutet dies, daß sich der Wasserstand in der Kammer nach Inbetriebnahme des Systems dem Außenwasserspiegel angleicht, so daß zur Einhaltung des geforderten Kammerwasserspiegels, der zwischen Außen- und Innenwasserspiegel liegt, eine regelmäßige Entleerung der Kammer notwendig wird. Im umgekehrten Fall, wenn also das innere Dichtelement durchlässiger ist als das äußere, muß die Kammer in regelmäßigen Abständen befüllt werden.

Ein Verfahren zur Herstellung einer hydraulischen Verbindung von Dichtwandkammern eines Dichtwandkammersystems gemäß dem Oberbegriff des Anspruchs 1 ist aus der EP-A-0844031 bekannt.

Der Erfindung liegt nun die Aufgaben zugrunde, ein einfaches, zuverlässiges und kostengünstiges Verfahren zur hydraulischen Verbindung aller Kammern eines Kammersystems anzugeben, die das Erstellen von aufwendigen Kammerverbindungsbauwerken oder den Einbau von absperrbaren Filterrohrringleitungen überflüssig macht und zudem soll der Aufwand für die Kontrolle und Steuerung des Kammerwasserstandes reduziert werden. Insbesondere soll auf aufwendige elektronische Überwachungs- und Steuerungsmechanismen verzichtet werden.

Die Erfindung löst die Aufgabe mit den Merkmalen des Patentanspruchs 1. Erfindungsgemäß ist erkannt worden, daß es möglich ist, die Nachteile des Standes der Technik zu vermeiden, indem zunächst eine Bohrung in das Querschott abgeteuft und danach ein Hydroventil in die Bohrung eingebaut wird. Die Erfindung hat nun verschiedene Vorteile. So läßt sich auf einfache Art und Weise eine hydraulische Verbindung zwischen den einzelnen Kammern herstellen. Bei Bedarf kann diese hydraulische Verbindung durch Schließen des Hydroventils unterbrochen werden. So kann einerseits im Regelbetrieb eine gemeinsame und dadurch vereinfachte Steuerung des Kammersystems erfolgen, andererseits ist aber auch eine Trennung in Einzelkammern problemlos möglich. Der Einsatz mechanischer Absperrvorrichtungen zur Abschottung der einzelnen Dichtwandkammern entfällt. Weitere Vorteile der Erfindung liegen darin, daß keine Leitungen oder Schächte im Bereich des Querschottes zum Liegen kommen, deren Abdichtung zum Querschott problematisch ist, eine Filterrohrringleitung entfällt, der Funktionsbereich des Hydroventils jederzeit oberirdisch zugänglich ist und eine einfache und kostengüstige Herstellung gewährleistet ist.

Eine vorteilhafte Lösung der Aufgabe der Erfindung ergibt sich mit den Merkmalen des Anspruchs 2. Erfindungsgemäß ist erkannt worden, daß es gelingt, den Aufwand für die Kontrolle und Steuerung des Kammerwasserstandes zu reduzieren und insbesondere auf aufwendige elektronische Überwachungs- und Steuerungsmechanismen zu verzichten, indem zunächst eine Bohrung in eine der Dichtwände (entweder die Außen- oder die Innenwand) einer Kammer abgeteuft wird und danach ein Hydroregelventil in die Bohrung eingebaut wird. So kann auf einfache Art und Weise eine hydraulisch wirksame Verbindung zwischen dem Kammerinnenraum und entweder dem Außen- oder Innenbereich des Kammersystems hergestellt werden, die bei Bedarf durch Schließen des Hydroregelventils aufgehoben werden kann. Das Hydroregelventil wird somit zum gezielten Ausgleich der ausführungstechnisch bedingten, geringfügig ungleichen Durchlässigkeit der einzelnen Dichtwände (äußere oder innere Dichtwand) des Kammersystems eingesetzt.

Anfällige und teure elektronische Überwachungs- und Steuerungsmaßnahmen entfallen.

Das Hydroregelventil wird derart in der Kammer positioniert, daß bei einer gegenüber der Außenwand dichteren Innenwand das Hydroregelventil in die Innenwand gesetzt wird, wohingegen bei einer gegenüber der Innenwand dichteren Außenwand das Hydroregelventil in die Außenwand gesetzt wird. Die durch das geöffnete Hydroregelventil mögliche hydraulische Kommunikation zwischen dem Kammerwasserspiegel und dem Außen- bzw. Innenwasserspiegel ermöglicht eine, in Abhängigkeit von der Einstellung des Hydroregelventils, exakt definierte Durchströmung entweder durch die Außen- oder die Innenwand, so daß eine Selbstregelung des Kammerwasserspiegels gewährleistet ist.

Sollte der Boden innerhalb der einzelnen Kammern inhomogen und dadurch unterschiedlich durchlässig sein und sich daher kein einheitlicher Wasserstand in allen Kammern einstellen, besteht die Möglichkeit, eine hydraulisch wirksame Schicht in den Boden einzubringen. Hierzu werden Bohrungen in das Kammerinnere abgeteuft, der anstehende, weniger durchlässige Boden entfernt und dieser gezielt durch durchlässiges Material ersetzt (z. B. Kieserweiterungsbohrung, Längsdrainagesystem). Auch ist der Einbau einer Filterrohrringleitung weiter möglich, wobei eine Duchführung der Leitung durch Querschotts nicht mehr erforderlich ist. Hierzu wird eine nur durch eine Kammer laufende Filterrohrleitung in den Untergrund eingebracht und ihre beiden offenen Enden an die Querschotts herangeführt. Das in dieser Leitung geführte Wasser gelangt durch den Austritt aus der Leitung an den Querschotts in unmittelbare Nähe des durchlässigen Bereichs des Hydroventils, so daß eine Weiterleitung in die nächste Kammer möglich ist. Jede der Kammern kann mit einer Filterrohrleitung nach diesem System versehen werden.

Es gibt nun verschiedene Möglichkeiten, die Lehre der vorliegenden Erfindung in vorteilhafter Weise auszugestalten und weiterzubilden. Dazu wird einerseits auf die den Patentansprüchen 1 und 2 nachgeordneten Ansprüche, andererseits auf die nachfolgende Erläuterung von drei Ausführungsbeispielen der Erfindung verwiesen. In Verbindung mit der Erläuterung der bevorzugten Ausführungsbeispiele der Erfindung werden auch im allgemeinen bevorzugte Ausgestaltungen und Weiterbildungen der Lehre erläutert.

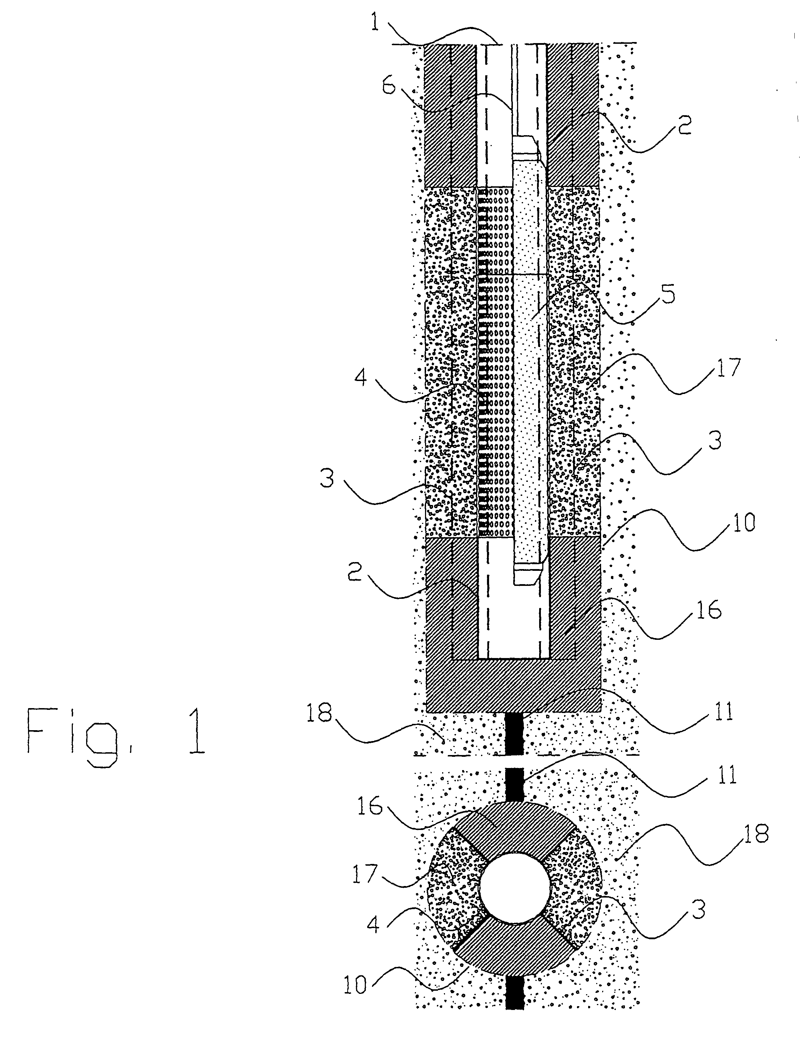

Figur 1 zeigt eine einfache Ausgestaltung eines erfindungsgemäßen Hydroventils 1. Das Hydroventil 1 ist ein verschließbares Verbindungselement zwischen den Dichtwandkammern und wird in das Querschott 11 eingebaut. Dazu wird eine Bohrung 10 durch das Querschott 11 im Baugrund 18 abgeteuft, in die ein mit vier angeschweißten Kammerflügeln 3 ausgestattetes Rohr 2, das mit einer Filterstrecke 4 ausgestattet ist, eingebaut ist. Die Kammerflügel 3 dienen zur Unterteilung in Dichtkammern 16 und Filterkammern 17. Für die periodisch durchzuführenden Kammerprüfungen muß das Hydroventil 1 geschlossen werden. Als Verschlußorgane dienen aufblasbare Packer 5, die mit Hilfe einer Druckluftleitung, die in einem Gestänge 6 untergebracht ist, in die Filterstrecke 4 eingeführt werden.

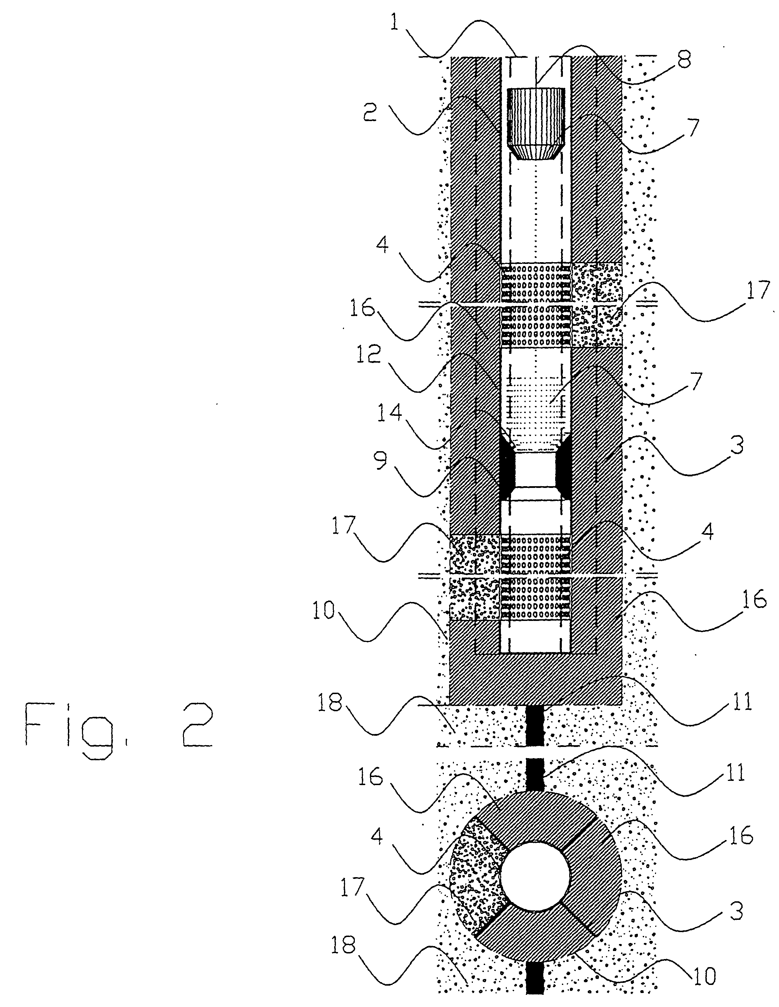

Figur 2 zeigt eine weitere mögliche Ausgestaltung eines Hydroventils 1. Das Rohr 2 ist mit zwei übereinanderliegenden, räumlich getrennten Filterstrecken 4 versehen. Das Verschließen zwischen den Filterstrecken 4 findet mit Hilfe eines Verschlußkonus 7 statt. Der Ventilsitz 9 ist mit einer Dichtung 14 versehen, auf die sich der an einem Zugmittel 8, beispielsweise einem Seil, befestigte Verschlußkonus 7 setzt. Für die periodisch durchzuführenden Kammerprüfungen wird der Verschlußkonus 7 bis in den Ventilsitz herabgelassen. Das Gewicht des Verschlußkonus 7 wird so gewählt, daß sein Eigengewicht größer ist als die größtmögliche Auftriebskraft, die durch den Maximalwasserstand in der Kammer verursacht wird. Um Sedimentationsvorgängen entgegenzuwirken, wird die Strömungsrichtung durch das Vollrohr 12 von unten nach oben gewählt.

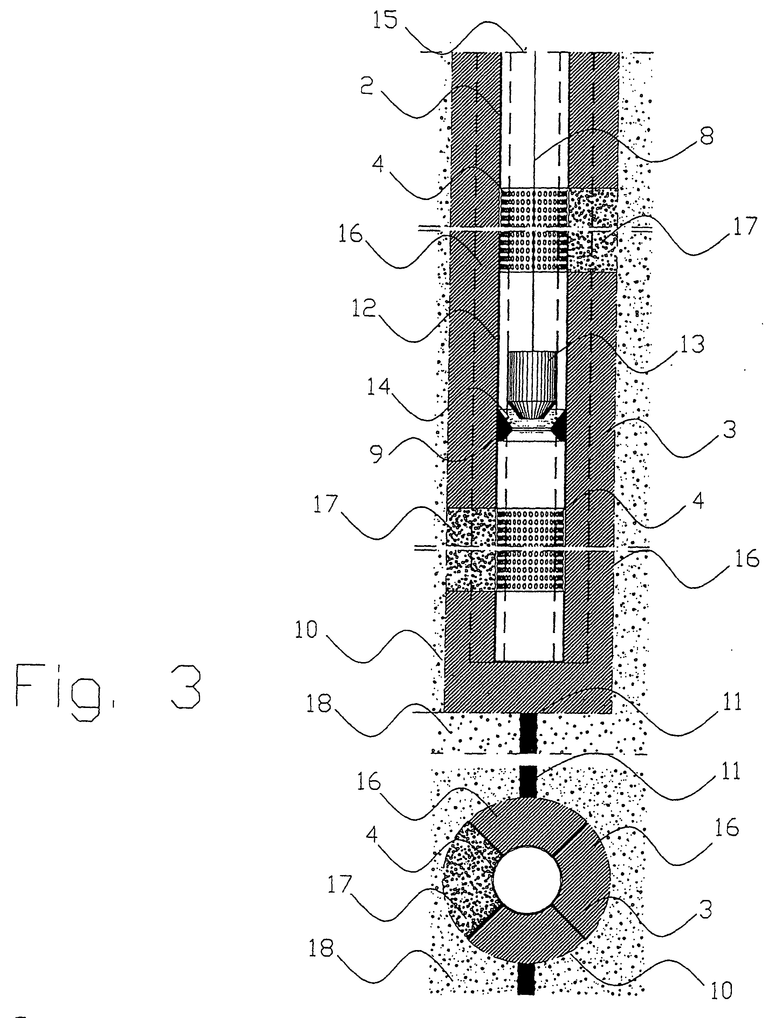

In Figur 3 ist eine weitere vorteilhafte Gestaltung des erfindungsgemäßen Hydroventils 1 dargestellt. Das Hydroventil 1 ist in diesem Fall als sogenanntes Hydroregelventil 15 ausgestaltet. Zu seiner Herstellung wird zunächst wieder eine Bohrung 10 hergestellt, in die ein mit vier Kammerflügeln 3 ausgestattetes Rohr 2 mit übereinanderliegenden, räumlich getrennten Filterstrecken 4 und dazwischenliegendem Vollrohr 12, in dem das Schwimmerventil 13 montiert wird, eingebaut wird. Die Wirkung des Schwimmerventils 13 basiert auf dem Auftriebsprinzip. Das Schwimmerventil 13 bleibt solange geschlossen und dichtet gegen die Dichtung 14 des Ventilsitzes 9 ab, solange die Summe seines Eigengewichts plus der anstehenden Druckkraft von oben auf das Schwimmerventil 13 größer ist als die Druckkraft plus dynamischer Strömungskraft von unten. Um Sedimentationsvorgängen entgegenzuwirken, wird die Strömungsrichtung durch das Vollrohr 12 von unten nach oben gewählt.

Es sei darauf hingewiesen, daß die Erfindung sowohl in einer vertikalen als auch in einer Schrägbohrung benutzt werden kann. Schrägbohrungen werden verwendet, wenn die Zugänglichkeit des Dichtelements von oben nicht mehr gewährleistet ist. Dabei wird das zu behandelnde Dichtelement (Querschott 11, Innen- oder Außenwand) in einer bestimmten Tiefe durchstoßen und hier das Hydroventil 1 oder das Hydroregelventil 15 eingebaut. Die Erfindung kann weiterhin dazu benutzt werden, ehemals wasserdichte Baugrubenumschließungen nach Wegfall der Forderung nach Wasserdichtigkeit wieder durchströmbar zu machen (z.B. bei Wand-Sohle-Systemen mit beispielsweise einer tiefliegenden Düsenstrahlsohlen). In einer weiteren Ausgestaltung der Erfindung können beispielsweise die Filterkammern 17 mit einem reaktiven Material (z. B. Eisenspäne) gefüllt werden, welches Kontaminationen im durchfließenden Wasser abbaut oder filtert oder es können zum selben Zwecke austauschbare und durchströmbare, mit reaktiven Material gefüllte Behältnisse in das Rohr 2 eingebaut werden. Es ist weiterhin möglich, die Filterkammern 17 und die Dichtkammern 16 vor dem Einbau mit Filtermaterial bzw. Dichtmaterial zu bestücken und dann das Rohr 2 zusammen mit den gefüllten Filter- 17 bzw. Dichtkammern 16 als Fertigteil einzubauen.

### Bezugszeichenliste:

- 1: Hydroventil
- 2: Rohr
- 3: Kammerflügel
- 4: Filterstrecke
- 5: Packer
- 6: Gestänge
- 7: Verschlußkonus
- 8: Zugmittel
- 9: Ventilsitz
- 10: Bohrung
- 11: Querschott
- 12: Vollrohr
- 13: Schwimmerventil
- 14: Dichtung
- 15: Hydroregelventil
- 16: Dichtkammer
- 17: Filterkammer
- 18: Baugrund

## Patentansprüche

1. Verfahren zur Herstellung einer hydraulischen Verbindung von Dichtwandkammern eines Dichtwandkammersystems bestehend aus parallel zueinander verlaufenden Dichtwänden und Querschotts (11), die in Abständen zwischen den Dichtwänden angeordnet sind,
**dadurch gekennzeichnet, dass** zunächst eine Bohrung (10) in das Querschott (11) abgeteuft wird und danach ein als Rohr (2) mit angeschweißten Kammerflügeln (3) ausgebildetes Hydroventil (1) in die Bohrung (10) eingebaut wird.

2. Verfahren zur Steuerung des Wasserspiegels in einem Dichtwandkammersystem bestehend aus parallel zueinander verlaufenden Dichtwänden und Querschotts (11), die in Abständen zwischen den Dichtwänden angeordnet sind,
**dadurch gekennzeichnet, dass** zunächst eine Bohrung (10) in eine der Dichtwände des Kammersystems abgeteuft wird und danach ein als Rohr (2) mit angeschweißten Kammerflügeln (3) ausgebildetes Hydroventil (1) in die Bohrung (10) eingebaut wird.

3. Verfahren zur Herstellung eines Hydroventils nach einem der Ansprüche 1 oder 2, **dadurch gekennzeichnet, dass** das Rohr (2) mit einer oder mehreren übereinanderliegenden, räumlich getrennten Filterstrecken (4) versehen ist.

4. Verfahren zur Herstellung eines Hydroventils nach einem der Ansprüche 1 oder 2, **dadurch gekennzeichnet, dass** das Rohr (2) aus Edelstahl besteht.

5. Verfahren zur Herstellung eines Hydroventils (1) nach einem der Ansprüche 1 bis 4, **dadurch gekennzeichnet, daß** das Rohr (2) aus Polyethylen besteht.

6. Verfahren zur Herstellung eines Hydroventils (1) nach einem der Ansprüche 1 bis 5, **dadurch gekennzeichnet, daß** das Rohr (2) im Bereich von Filterstrecken (4) mit Hilfe eines aufblasbaren Packers (5) verschlossen wird.

7. Verfahren zur Herstellung eines Hydroventils (1) nach Ansprüch 6, **dadurch gekennzeichnet, daß** ein Vollrohr (12) zwischen den Filterstrecken (4) mit einem Verschlußkonus (7) verschlossen wird.

8. Verfahren zur Herstellung eines Hydroventils (1) nach Ansprüch 7, **dadurch gekennzeichnet, daß** der Verschlußkonus (7) an einem Zugmittel (8) befestigt ist.

9. Verfahren zur Herstellung eines Hydroventils (1) nach Ansprüch 7, **dadurch gekennzeichnet, daß** das Vollrohr (12) zwischen den Filterstrecken (4) mit einem regelbaren oder einem selbstregelnden Schwimmerventil (13) verschlossen wird.

10. Verfahren zur Herstellung eines Hydroventils (1) nach einem der Ansprüche 1 bis 9, **dadurch gekennzeichnet, daß** zur Herstellung, zum Einbau und zur Positionierung des Hydroventils eine senkrechte Bohrung verwendet wird.

11. Verfahren zur Herstellung eines Hydroventils (1) nach einem der Ansprüche 1 bis 9, **dadurch gekennzeichnet, daß** zur Herstellung, zum Einbau und zur Positionierung des Hydroventils eine Schrägbohrung unter beliebigem Winkel verwendet wird.

12. Verfahren zur Herstellung eines Hydroventils (1) nach einem der Ansprüche 1 bis 11, **dadurch gekennzeichnet, daß** in Filterkammern (17) ein flüssigkeits- und gasdurchlässiges Material eingefüllt wird.

13. Verfahren zur Herstellung eines Hydroventils (1) nach einem der Ansprüche 1 bis 12, **dadurch gekennzeichnet, daß** in die Dichtkammern (16) ein gegen eine anschließende Dichtwand, wie z. B. das Querschott (11), oder eine Innen- oder Außenwand des Dichtwandkammersystems, abdichtende, zumindest weitgehend wasserundurchlässiges Material eingefüllt wird.

14. Verfahren zur Herstellung eines Hydroventils (1) nach Ansprüche 13, **dadurch gekennzeichnet, daß** in das aus Filterstrecke (4), Rohr (2) und Vollrohr (12) bestehende mittige Rohrelement ein mit reaktivem Material gefülltes Behältnis eingebaut wird, welches zum Austausch des reaktiven Materials beliebig oft herausgenommen und wieder hinabgeführt werden kann.

15. Verfahren zur Herstellung eines Hydroventils (1) nach Ansprüch 14, **dadurch gekennzeichnet, daß** das reaktive Material in die Filterkammern (17) eingebaut wird.

16. Verfahren zur Herstellung eines Hydroventils (1) nach Ansprüch 15, **dadurch gekennzeichnet, daß** ein Einbau des Hydroventils mit bereits gefüllten Filter- (17) und Dichtkammern (16), deren Füllungen mit einem durchlässigen, gitter- oder netzförmigen, die jeweiligen Kammern umspannenden, flächenhaften Bauteil in ihrer Lage gehalten werden, möglich ist.

17. Verfahren zur Herstellung eines Hydroventils (1) nach Ansprüch 16, **dadurch gekennzeichnet, daß** beim Einbau des Hydroventils zunächst keine Füllung der Filter- (17) und Dichtkammern (16) vorgesehen ist, und diese Füllung nach dem Einbau in die Bohrung (10) mit Hilfe von Schüttrohren von der Geländeoberfläche aus stattfindet.

18. Verfahren zur Herstellung eines Hydroventils (1) nach einem der Ansprüche 6 bis 17, **dadurch gekennzeichnet, daß** die Kammerflügel (3) sich nur im Bereich der Filterstrecken (4) befinden und aufgrund von Herstellungsungenauigkeit auf ein Länge von bis zu 2 m oberhalb und unterhalb der Filterstrecken.erweitert werden.

19. Verfahren zur Herstellung eines Hydroventils (1) nach einem der Ansprüche 1 bis 18, **dadurch gekennzeichnet, daß** die Kammerflügel (3) sich über die komplette Länge des Hydroventils erstrecken.

## Claims

1. Procedure for the manufacture of a hydraulic connection of trench wail cells of a trench wall cell system consisting of parallel aligned trench walls and transversal bulkheads (11) being arranged with distances between the trench wall cells, **characterized in that** first a borehole (10) is sank in the transversal bulkheads (11) and subsequently a hydrovalve (1) being conceived as a tube (2) with welded cell wings (3) is mounted into the borehole (10).

2. Procedure for the control of the water level in a trench wall cell system consisting of parallel aligned trench walls and transversal bulkheads (11) being arranged with distances between the trench wall cells, **characterized in that** first a borehole (10) is sank into one of the transversal bulkheads (11) of the cell system and subsequently a hydrovalve (1) being conceived as a tube (2) with welded cell wings (3) is mounted into the borehole (10).

3. Procedure for the manufacture of a hydrovalve according to one of the claims 1 or 2 **characterized in that** the tube (2) is provided with one or several stacked, separated filterspans (4).

4. Procedure for the manufacture of a hydrovalve according to one of the claims 1 or 2 **characterized in that** the tube (2) is made from high grade steel.

5. Procedure for the manufacture of a hydrovalve (1) according to one of the claims 1 to 4 **characterized in that** the tube (2) is made from polyethylen.

6. Procedure for the manufacture of a hydrovalve (1) according to one of the claims 1 to 5 **characterized in that** the tube (2) is closed in the area of the filterspans (4) by means of an inflatable packer.

7. Procedure for the manufacture of a hydrovalve (1) according to claim 6 **characterized in that** a fulltube (12) is closed between the filterspans (4) with a closure taper (7).

8. Procedure for the manufacture of a hydrovalve (1) according to claim 7 **characterized in that** the closure taper (7) is fixed to a pulling means (8).

9. Procedure for the manufacture of a hydrovalve (1) according to claim 7 **characterized in that** the fulltube (12) is closed between the filterspans (4) by means of a controllable or a self regualting float valve (13).

10. Procedure for the manufacture of a hydrovalve (1) according to one of the claims 1 to 9 **characterized in that** a vertical borehole is applied for the manufacture, mounting and positioning of the hydrovalve.

11. Procedure for the manufacture of a hydrovalve (1) according to one of the claims 1 to 9 **characterized in that** an inclined borehole with whatever angles is applied for the manufacture, mounting and positioning of the hydrovalve.

12. Procedure for the manufacture of a hydrovalve (1) according to one of the claims 1 to 11 **characterized in that** a material pervious to water and gas is filled in the filter cells (17).

13. Procedure for the manufacture of a hydrovalve (1) according to one of the claims 1 to 12 **characterized in that** a material is filled into the trench cells (16) sealing against an adjacent trench wall, e. g. the transversal bulkhead (11) or an inner or outer wall of the trench wall cell system being at least extensively pervious to water.

14. Procedure for the manufacture of a hydrovalve (1) according to claim 13 **characterized in that** a container filled with reactive material is built into the centered tube element consisting of filterspan (4), tube (2) and fulltube (12), said container can be taken out und put back again as many times as wanted for replacement of the reactive material.

15. Procedure for the manufacture of a hydrovalve (1) according to claim 14 **characterized in that** the reactive material is built into filter cells (7).

16. Procedure for the manufacture of a hydrovalve (1) according to claim 15 **characterized in that** a mounting of the hydrovalve is possible with already filled filter (17) and trench cells (16) such fillings being maintained in their positions by a pervious grid- or netlike planar element encompassing the respective cells.

17. Procedure for the manufacture of a hydrovalve (1) according to claim 16 **characterized in that** at the mounting of the hydrovalve first no filling of the filter- (17) and trench cell (16) is provided and that this filling takes place after the mounting of the borehole (10) by means of bulk tubes from the surface of the surrounding.

18. Procedure for the manufacture of a hydrovalve (1) according to one of the claims 6 to 17 **characterized in that** the cell wings (3) are located exclusively in the area of the filter span (4) and that they are enlarged due to manufacturing tolerances to a length up to 2 m above und below the filter spans.

19. Procedure for the manufacture of a hydrovalve (1) according to one of the claims 1 to 18 **characterized in that** the cell wings (3) extend along the complete length of the hydrovalve.

## Revendications

1. Procédé de réalisation d'une liaison hydraulique des barrettes d'étanchéité d'un système cellulaire formé de barrettes d'étanchéité comportant des barrettes d'étanchéité et des cloisons transversales(11) parallèles entre elles qui sont disposées à intervalles entre les barrettes d'étanchéité
**caractérisé en ce que**
on commence par percer un alésage (10) dans la cloison transversale (11) puis qu'on place dans l'alésage (10) une soupape hydraulique (1) formée d'un tube (2) sur lequel ont été soudées les ailettes des barrettes (3).

2. Procédé de régulation du niveau d'eau dans un système cellulaire formé de barrettes d'étanchéité comportant des barrettes d'étanchéité et des cloisons transversales (11) parallèles entre elles qui sont disposées à intervalles entre les barrettes d'étanchéité
**caractérisé en ce que**
on commence par percer un alésage (10) dans une des barrettes d'étanchéité du système cellulaire à barrettes d'étanchéité (11) puis qu'on place dans l'alésage (10) une soupape hydraulique (1) formée d'un tube (2) sur lequel ont été soudées les ailettes des barrettes (3).

3. Procédé de réalisation d'une soupape hydraulique selon l'une des revendications 1 ou 2, **caractérisé en ce que**
le tube (2) est muni d'une ou plusieurs plages de filtration (4) superposées et spatialement distinctes.

4. Procédé de réalisation d'une soupape hydraulique selon l'une des revendications 1 ou 2, **caractérisé en ce que** le tube (2) est en acier spécial.

5. Procédé de réalisation d'une soupape hydraulique (1) selon l'une des revendications 1 à 4, **caractérisé en ce que** le tube (2) est en polyéthylène.

6. Procédé de réalisation d'une soupape hydraulique (1) selon l'une des revendications 1 à 5, **caractérisé en ce que** le tube (2) est obturé par une garniture d'étanchéité gonflable (5) au niveau des plages de filtration (4).

7. Procédé de réalisation d'une soupape hydraulique (1) selon la revendication 6, **caractérisé en ce qu'**un tube monobloc(12) entre les plages de filtration est obturé par un cône d'obturation (7).

8. Procédé de réalisation d'une soupape hydraulique (1) selon la revendication 7, **caractérisé en ce que** le cône d'obturation (7)est fixé à un mécanisme de traction (8).

9. Procédé de réalisation d'une soupape hydraulique (1) selon la revendication 7, **caractérisé en ce que** le tube monobloc (12) entre les plages de filtration (4) est obturé par une soupape flottante ajustable ou autorégulée (13).

10. Procédé de réalisation d'une soupape hydraulique (1) selon l'une des revendications 1 à 9, **caractérisé en ce qu'**un alésage vertical sert à la réalisation, le montage et le positionnement de la soupape hydraulique.

11. Procédé de réalisation d'une soupape hydraulique (1) selon l'une des revendications 1 à 9, **caractérisé en ce qu'**un alésage diagonal dont l'angle est indifférent sert à la réalisation, le montage et le positionnement de la soupape hydraulique.

12. Procédé de réalisation d'une soupape hydraulique (1) selon l'une des revendications 1 à 11, **caractérisé en ce qu'**on remplit les cellules de filtration (17) d'un matériau perméable aux liquides et aux gaz.

13. Procédé de réalisation d'une soupape hydraulique (1) selon l'une des revendications 1 à 12, **caractérisé en ce qu'**on remplit les cellules d'étanchéité (16) d'un matériau d'étanchéification imperméable à l'eau, du moins dans une large mesure, placé contre une paroi d'étanchéité adjacente, comme une cloison transversale (11), ou une paroi intérieure ou extérieure du système cellulaire à barrettes d'étanchéité.

14. Procédé de réalisation d'une soupape hydraulique (1) selon la revendication 13, **caractérisé en ce qu'**on intègre un récipient rempli de matériau réactif dans la partie médiane du tube constituée de la plage de filtration (4), du tube (2) et du tube monobloc (12), ledit récipient pouvant être sorti et à nouveau remis en place aussi souvent que nécessaire pour remplacer le matériau réactif.

15. Procédé de réalisation d'une soupape hydraulique (1) selon la revendication 14, **caractérisé en ce que** le matériau réactif est placé dans les cellules de filtration (17).

16. Procédé de réalisation d'une soupape hydraulique (1) selon la revendication 15, **caractérisé en ce qu'**il est possible de monter la soupape hydraulique avec des cellules de filtration (17) et d'étanchéité (16) déjà remplies dont le chargement est maintenu en place par un élément plat perméable sous forme de grille ou de filet qui entoure individuellement les cellules.

17. Procédé de réalisation d'une soupape hydraulique (1) selon la revendication 16, **caractérisé en ce qu'**on ne prévoit d'abord pas de remplir les cellules de filtration (17) et d'étanchéité (16) lors du montage de la soupape hydraulique et que le remplissage se fait au moyen de tuyaux de remplissage à partir de la surface du terrain après montage dans l'alésage (10).

18. Procédé de réalisation d'une soupape hydraulique (1) selon l'une des revendications 6 à 17, **caractérisé en ce que** les ailettes des cellules (3) sont situées uniquement au niveau des plages de filtration (4) et que celles-ci, pour des raisons de précision de la réalisation, peuvent être prolongées de jusqu'à 2 m au-dessus et au-dessous des plages de filtration.

19. Procédé de réalisation d'une soupape hydraulique (1) selon l'une des revendications 1 à 18, **caractérisé en ce que** les ailettes de cellules (3) font toute la longueur de la soupape hydraulique.
